(19) Europäisches Patentamt

European Patent Office

Office européen des brevets

(11) EP 1 655 882 A1

(12) **DEMANDE DE BREVET EUROPEEN**

(43) Date de publication:
**10.05.2006 Bulletin 2006/19**

(51) Int Cl.:
*H04L 7/02* (2006.01)

(21) Numéro de dépôt: **05110491.7**

(22) Date de dépôt: **08.11.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **09.11.2004 FR 0452576**

(71) Demandeur: **ST MICROELECTRONICS S.A.**
**92120 Montrouge (FR)**

(72) Inventeur: **Meyer, Jacques**
**38950 Saint-Martin-Le-Vinoux (FR)**

(74) Mandataire: **de Beaumont, Michel et al**
**1bis, rue Champollion**
**38000 Grenoble (FR)**

(54) **Dispositif de fourniture d'un signal d'erreur pour une boucle de correction de cadence d'un démodulateur numérique**

(57) L'invention concerne un dispositif (28) de fourniture d'un signal numérique d'erreur ($Err_n$), pour une boucle de correction de cadence d'un démodulateur numérique pour transmission numérique par modulation de phase, le dispositif recevant successivement des paires de signaux numériques ($I_n$, $Q_n$) représentatifs des composantes de signaux complexes, et comprenant un moyen de fourniture d'un signal de différence représentatif de la différence entre le module du signal complexe correspondant à la dernière paire de signaux numériques reçue et le module du signal complexe correspondant à la paire de signaux numériques précédemment reçue ; un moyen de fourniture d'un facteur de pondération qui dépend de l'angle entre le signal complexe correspondant à la dernière paire de signaux numériques reçue et le signal complexe correspondant à la paire de signaux numériques précédemment reçue ; et un moyen de fourniture du signal d'erreur proportionnel au produit du signal de différence et du facteur de pondération.

Fig 2

**Description**

Domaine de l'invention

La présente invention concerne un démodulateur pour transmission numérique, dans lequel des symboles sont transmis par modulation de phase, ou par modulation d'amplitude et de phase.

Exposé de l'art antérieur

Dans une transmission numérique idéale à large bande par modulation de porteuse, chaque symbole transmis est constitué par une ou plusieurs périodes d'une sinusoïde dont on a modifié un paramètre parmi l'amplitude, la fréquence et/ou la phase, le paramètre modifié ne pouvant prendre qu'un nombre limité de valeurs discrètes.

Dans le cas d'une modulation de phase idéale à large bande, le signal modulé v transmis suit la relation :

$$v(t) = A\cos(2\pi ft + \phi(t)) \tag{1}$$

où f est la fréquence de la porteuse, A est l'amplitude du signal et $\phi$ est la phase du signal. Le spectre du signal modulé correspond au spectre du signal en bande de base translaté autour de la fréquence de la porteuse avec suppression de cette dernière. L'équation (1) peut être mise sous la forme :

$$v(t) = A[\cos 2\pi ft * \cos\phi(t) - \sin\pi ft * \sin\phi(t)] \tag{2}$$

L'équation (2) correspond à la somme de deux porteuses en quadrature modulées en amplitude. De façon générale, l'équa tion (1) peut être mise sous la forme:

$$v(t) = \text{Re}(ae^{j(2\pi ft + \phi)}) = \text{Re}(ae^{j\phi}e^{j2\pi ft}) \tag{3}$$

L'amplitude complexe $ae^{j\phi}$ est représentée, dans le plan complexe, par un point dont les coordonnées I et Q sont données par la relation suivante :

$$I = a \times \cos\phi \quad \text{et} \quad Q = a \times \sin\phi \tag{4}$$

Pour une transmission numérique idéale par modulation de phase à M états, la phase $\phi$ peut prendre des valeurs discrètes parmi M valeurs, ce qui correspond à M points ou états dans le plan complexe. La disposition des points dans le plan complexe s'appelle une constellation. Le nombre de bits pouvant être codés pour chaque symbole transmis est égal à $\text{Log}_2(M)$.

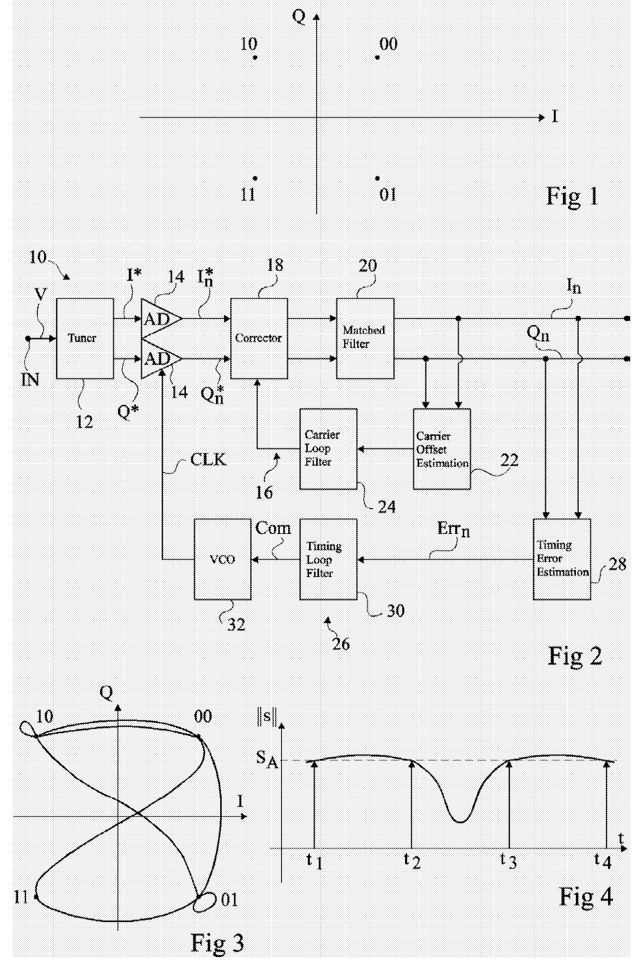

La figure 1 représente un exemple de constellation pour une modulation de phase idéale à quatre états ou modulation QPSK (acronyme anglais pour Quadrature Phase Shift Keying). Chaque symbole transmis correspond à l'un des quatre états de phase et transporte une information d'un mot de deux bits. A titre d'exemple, en figure 1, on a représenté, à côté de chaque état, la suite de bits codée par celui-ci.

Le signal modulé transmis peut s'écrire sous la forme :

$$v(t) = x\cos 2\pi ft + y\sin 2\pi ft \tag{5}$$

où x et y sont égaux à $\pm 1$. Une telle modulation est fréquemment utilisée en téléphonique numérique.

La figure 2 représente un exemple de démodulateur classique 10 pour transmission numérique par modulation de phase. Le démodulateur 10 reçoit un signal modulé v à une borne d'entrée IN. Le signal v est fourni à un module 12 (Tuner) de transfert du signal en bande de base. Le fonctionnement du module de transfert en bande de base nécessite la détermination de la fréquence de la porteuse ayant servi à la modulation des symboles transmis. Le module 12 fournit deux signaux analogiques I*, Q* qui correspondent, dans le plan complexe de la constellation, à des composantes d'un signal complexe s. Les signaux I\*, Q\* sont convertis en signaux numériques I\*$_n$, Q\*$_n$ par des convertisseurs analogique-numérique 14 (AD) commandés par un signal d'horloge d'échantillonnage CLK. Etant donné les imprécisions et les fluctuations lors de la détermination de la porteuse utilisée par le module 12, une correction supplémentaire doit généralement être effectuée sur les signaux numériques I\*$_n$, Q\*$_n$ afin de corriger un décalage de la fréquence de la porteuse, appelé par la suite décalage de porteuse. Un décalage de porteuse se traduit par une rotation de la constellation dans le plan complexe. Une correction du décalage de porteuse est réalisé par une boucle de correction de décalage de porteuse 16 qui comprend un module de correction 18 (Corrector) qui corrige les signaux I\*$_n$, Q\*$_n$ et attaque un filtre adapté 20 qui fournit des signaux numériques I$_n$, Q$_n$ filtrés. Un module d'estimation de décalage de porteuse 22 reçoit les signaux numériques I$_n$, Q$_n$ et détermine un signal d'erreur représentatif du décalage de porteuse. Le signal d'erreur de décalage de porteuse est transmis à un filtre 24 (Carrier Loop Filter) qui fournit un signal de commande au module de correction 18.

Une autre correction doit être réalisée en raison du fait qu'en pratique la modulation de phase mise en oeuvre n'est pas une modulation de phase idéale. Une telle correction concerne la détermination des instants d'échantillonnage des signaux I\*$_n$, Q\*$_n$ fournis par le module 12. En effet, pour limiter la bande passante du signal modulé, la modulation de la porteuse n'est pas réalisée par un brusque passage d'un état à un autre de la constellation mais par une transition continue entre les états de la constellation. Il est donc souhaitable que les signaux I\*, Q\* soient échantillonnés à des instants optimaux correspondant aux passages du signal s par des états de la constellation et non à des instants correspondant à des transitions entre deux états. Une telle correction est réalisée par une boucle de correction de cadence 26. La boucle de correction de cadence 26 comprend un dispositif d'estimation d'erreur de cadence 28 qui reçoit les signaux I$_n$, Q$_n$ et fournit un signal d'erreur Err$_n$ à un filtre 30 (Timing Loop Filter). Le filtre 30 fournit un signal de commande Com à un oscillateur commandé en tension 32 (VCO) qui fournit le signal d'horloge d'échantillonnage CLK aux convertisseurs analogique-numérique 14 à une fréquence d'échantillonnage qui dépend du signal de commande Com.

Il existe plusieurs exemples de dispositifs d'estimation d'erreur de cadence. Un premier exemple de dispositif met en oeuvre l'algorithme de Gardner (défini dans la publication intitulée "A BPSK/QPSK Timing Error Detector for Sampled Receivers" IEEE Transactions on Communications, Vol. Com-34, pages 423-429, Mai 1986). Un tel dispositif d'estimation d'erreur fournit un signal d'erreur selon la relation suivante :

$$\mathrm{Err}_n = I_n[I_{n+1/2} - I_{n-1/2}] + Q_n[Q_{n+1/2} - Q_{n-1/2}] \qquad (6)$$

où n représente l'indice du symbole considéré. Une telle détermination du signal d'erreur présente l'avantage d'être indépendante de la phase de la porteuse et accepte donc un décalage de fréquence de porteuse important. La fourniture d'un signal d'erreur Err$_n$ utilisable ne nécessite donc pas que la boucle de correction de décalage de porteuse 16 ait convergé. Toutefois, un inconvénient d'une telle estimation d'erreur de cadence est qu'elle nécessite la détermination pour un symbole d'indice n de deux valeurs inter-symboles supplémentaires notées par les indices n±1/2.

Un autre exemple de dispositif d'estimation d'erreur de cadence utilise l'algorithme de Mueller et Müller (défini dans la publication intitulée "Timing Recovery in Digital Synchronous Data Receivers", IEEE Transactions on Communications, Vol. Com-26, pages 516-531, Mai 1976). L'algorithme de Mueller et Müller nécessite qu'une hypothèse soit réalisée sur la valeur du signal complexe correspondant aux composantes I$_n$ et Q$_n$, par exemple en considérant que le point de la constellation le plus proche du symbole échantillonné correspond à celui qui devrait être reçu. Une telle estimation d'erreur présente l'avantage de ne pas nécessiter la détermination de valeurs inter-symboles supplémentaires entre deux symboles échantillonnés. Toutefois, elle a deux inconvénients importants : le premier est que la constellation doit être connue, le second est qu'elle est sensible à un décalage de la porteuse et requiert donc que la boucle de correction de décalage de porteuse ait convergé.

Résumé de l'invention

La présente invention vise un dispositif d'estimation d'erreur de cadence qui ne nécessite pas la détermination de valeurs inter-symboles supplémentaires par rapport aux valeurs échantillonnées et qui est peu sensible à un décalage de porteuse.

Selon un autre objet, la présente invention vise un dispositif d'estimation d'erreur de cadence de conception simple.

Pour atteindre ces objets, la présente invention prévoit un dispositif de fourniture d'un signal numérique d'erreur, pour une boucle de correction de cadence d'un démodulateur numérique pour transmission numérique par modulation de phase ou modulation d'amplitude et de phase, le module recevant successivement des paires de signaux numériques représentatifs des composantes de signaux complexes, et comprenant un moyen de fourniture d'un signal de différence représentatif de la différence entre le module, élevé à une puissance déterminée, du signal complexe correspondant à la dernière paire de signaux numériques reçue et le module, élevé à la puissance déterminée, du signal complexe correspondant à la paire de signaux numériques précédemment reçue ; un moyen de fourniture d'un facteur de pondération qui dépend de l'angle entre le signal complexe correspondant à la dernière paire de signaux numériques reçue et le signal complexe correspondant à la paire de signaux numériques précédemment reçue ; et un moyen de fourniture du signal d'erreur proportionnel au produit du signal de différence et du facteur de pondération.

Selon un mode de réalisation de l'invention, le moyen de fourniture du facteur de pondération est adapté à fournir le facteur de pondération égal à la somme d'une constante déterminée et d'un terme dont le signe dépend de l'angle entre le signal complexe correspondant à la dernière paire de signaux numériques reçue et le signal complexe correspondant à la paire de signaux numériques précédemment reçue.

Selon un mode de réalisation de l'invention, le moyen de fourniture du facteur de pondération est adapté à fournir le facteur de pondération égal à la somme de la constante déterminée et d'un terme proportionnel au cosinus de l'angle entre le signal complexe correspondant à la dernière paire de signaux numériques reçue et le signal complexe correspondant à la paire de signaux numériques précédemment reçue.

La présente invention prévoit également une boucle de correction de cadence pour un démodulateur numérique pour transmission numérique par modulation de phase ou par modulation d'amplitude et de phase, comprenant des convertisseurs analogique-numérique recevant une paire de signaux analogiques et fournissant successivement au rythme d'un signal d'horloge d'échantillonnage des paires de signaux numériques échantillonnés représentatifs des composantes de signaux complexes ; un dispositif de fourniture d'un signal d'erreur numérique tel que défini précédemment, recevant successivement des paires de signaux numériques obtenues par filtrage des paires de signaux numériques échantillonnés ; et un moyen de fourniture d'un signal d'horloge d'échantillonnage dont la fréquence varie en fonction du signal d'erreur.

La présente invention prévoit également une boucle de correction de cadence pour un démodulateur numérique pour transmission numérique par modulation de phase ou par modulation d'amplitude et de phase, comprenant des convertisseurs analogique-numérique recevant une paire de signaux analogiques et fournissant successivement à une fréquence déterminée des paires de signaux numériques échantillonnés représentatifs des composantes de signaux complexes ; un moyen d'interpolation recevant les paires de signaux numériques échantillonnés et adapté à fournir successivement des paires de signaux numériques interpolés à partir de dernières paires de signaux numériques échantillonnés reçus et d'un signal de commande ; un dispositif de fourniture d'un signal d'erreur numérique tel que défini précédemment, recevant successivement les paires de signaux numériques interpolés ; et un moyen de fourniture du signal de commande qui varie en fonction du signal d'erreur.

La présente invention prévoit également un démodulateur numérique recevant un signal modulé par une modulation de phase ou par une modulation d'amplitude et de phase, comprenant un module de transfert en bande de base du signal modulé adapté à fournir une paire de signaux analogiques représentatifs des composantes d'un signal complexe ; et une boucle de correction de cadence telle que définie précédemment, recevant la paire de signaux analogiques.

La présente invention prévoit également un procédé de fourniture d'un signal numérique d'erreur, pour une boucle de correction de cadence d'un démodulateur numérique pour transmission numérique par modulation de phase ou par modulation d'amplitude et de phase, comprenant les étapes consistant à recevoir successivement des paires de signaux numériques représentatifs des composantes de signaux complexes ; à fournir un signal de différence représentatif de la différence entre le module, élevé à une puissance déterminée, du signal complexe correspondant à la dernière paire de signaux numériques reçue et le module, élevé à la puissance déterminée, du signal complexe correspondant à la paire de signaux numériques précédemment reçue ; à fournir un facteur de pondération qui dépend de l'angle entre le signal complexe correspondant à la dernière paire de signaux numériques reçue et le signal complexe correspondant à la paire de signaux numériques précédemment reçue ; et à fournir le signal d'erreur proportionnel au produit du signal de différence et du facteur de pondération.

Selon un mode de réalisation de l'invention, le facteur de pondération est égal à la somme de la constante déterminée et d'un terme proportionnel au cosinus de l'angle entre le signal complexe correspondant à la dernière paire de signaux numériques reçue et le signal complexe correspondant à la paire de signaux numériques précédemment reçue.

Selon un mode de réalisation de l'invention, le facteur de pondération est égal au signe de la somme de la constante déterminée et d'un terme égal au cosinus de l'angle entre le signal complexe correspondant à la dernière paire de signaux numériques reçue et le signal complexe correspondant à la paire de signaux numériques précédemment reçue.

Selon un mode de réalisation de l'invention, la constante déterminée est nulle.

Brève description des dessins

Ces objets, caractéristiques et avantages, ainsi que d'autres de la présente invention seront exposés en détail dans la description suivante d'exemples de réalisation particuliers faite à titre non-limitatif en relation avec les figures jointes parmi lesquelles :

la figure 1 représente un exemple de constellation pour une modulation de phase à quatre états ;
la figure 2 représente schématiquement les composants principaux d'un démodulateur pour transmission numérique par modulation de phase ;
la figure 3 représente un exemple d'évolution, dans le plan de la constellation, du signal complexe analogique obtenu après transfert en bande de base du signal modulé ;
la figure 4 représente un exemple d'évolution temporelle du module du signal complexe analogique obtenu après transfert en bande de base du signal modulé ;
les figures 5 et 6 illustrent le procédé d'estimation d'erreur de cadence selon la présente invention ;
la figure 7 représente, de façon plus détaillée, les composants du filtre utilisé pour la boucle de correction de cadence ; et
la figure 8 représente un autre exemple de réalisation du démodulateur selon l'invention.

Description détaillée

Par souci de clarté, de mêmes éléments ont été désignés par de mêmes références aux différentes figures. La présente invention prévoit une structure originale du dispositif d'estimation d'erreur de cadence basée sur une analyse de l'évolution temporelle du signal analogique complexe s obtenu à partir des composantes I*, Q* fournies par le module de transfert en bande de base 12. La présente invention va maintenant être décrite dans le cas d'une modulation de phase à quatre états (modulation QPSK). Il est toutefois clair que la présente invention s'applique également à toute modulation de phase. En outre, comme cela sera décrit plus en détail par la suite, la présente invention s'applique également à toute modulation combinant une modulation de phase et une modulation d'amplitude.

La figure 3 représente un exemple d'évolution dans le plan complexe de la constellation du signal analogique complexe s obtenu à partir des composantes I* et Q* fournies par le module 12 dans le cas d'une transmission sans bruit. Les disques noirs représentent les différents états de la constellation entre lesquels évolue le signal s. Par la suite, on appelle états opposés deux états pour lequel l'angle, pris à l'origine, entre les deux états est de 180°. Dans le présent exemple, il s'agit des états associés à la suite de bits "00" et "11" et des états associés à la suite de bits "10" et "01". De même, on appelle états adjacents deux états pour lesquels l'angle, pris à l'origine, entre les deux états est de 90°. Dans le présent exemple, il s'agit des couples d'états associés à la suite de bits "00" et "10", "01" et "11", "11" et "01" et "01" et "00".

La figure 4 représente un exemple d'évolution du module de s, noté $\|s\|$, dans le domaine temporel. Comme il s'agit d'une modulation de phase, $\|s\|$ a la même valeur, notée $S_A$, lors d'un passage par l'un des états de la constellation. Les références $t_1$ à $t_4$ représentent les instants de passage de s par l'un des états de la constellation et correspondent donc aux instants auxquels un échantillonnage doit être réalisé par les convertisseurs 14. De façon générale, la réalisation d'un filtrage par le filtre adapté 20 requiert que la fréquence d'échantillonnage des convertisseurs 14 soit supérieure à la fréquence symbole. La fréquence d'échantillonnage peut alors être un multiple de la fréquence symbole. On ne conserve alors pour la boucle de correction de cadence 26 que l'échantillon filtré qui a été déterminé à un instant de passage par l'un des états de la constellation.

Les inventeurs ont mis en évidence que lors d'une transition entre un état et l'état opposé, on observe, quasiment dans tous les cas, une nette diminution de $\|s\|$ par rapport à $S_A$. En figure 4, une transition entre deux états opposés correspond à la transition entre les instants $t_2$ et $t_3$. Lors d'une transition entre un état et un état adjacent ou lors d'une transition entre un état et le même état, $\|s\|$ évolue peu, en diminuant ou en augmentant légèrement par rapport à $S_A$. En figure 4, une transition entre deux états adjacents ou entre un état et le même état correspond aux transitions entre les instants $t_1$ et $t_2$, et $t_3$ et t4. De plus, les inventeurs ont mis en évidence que, lors d'une transition entre deux états, la distribution de $\|s\|$ est sensiblement symétrique, en particulier au voisinage des états.

Le dispositif d'estimation d'erreur de cadence 28 selon l'invention détermine le signal d'erreur $Err_n$ selon l'équation suivante :

$$Err_n = [\|s_n\| - \|s_{n-1}\|] \cdot [Re(s_n \cdot s_{n-1}^* - A)] \qquad (7)$$

où $s_n = I_n + jQ_n$, $s^*_{n-1}$ correspond au conjugué de $s_{n-1}$ et A est une constante réelle déterminée. La constante A est déterminée de façon à accélérer la convergence de la boucle de correction de cadence 26. Elle peut être égale à 0. Selon une variante de la présente invention, les modules $\|s_n\|$ et $\|s_{n-1}\|$ peuvent être obtenues par des expressions approchées.

Le premier terme entre crochets correspond sensiblement à la différence entre le module de s échantillonné à l'instant $t_n$ et le module de s échantillonné à l'instant précédent $t_{n-1}$. Etant donné l'évolution sensiblement symétrique de $\|s\|$ entre deux états d'échantillonnage optimaux, la différence des modules est représentative du décalage entre les instants d'échantillonnage utilisés par rapport aux instants recherchés. Le premier terme entre crochets de l'équation (7) est pondéré par le second terme entre crochets, appelé facteur de pondération. Le facteur de pondération est égal à la somme d'une constante et d'un terme proportionnel au cosinus de l'angle, pris à l'origine, entre les deux symboles successifs. Dans le cas d'une transition entre un état et l'état opposé, l'angle entre les deux signaux complexes étant proche de 180°, on obtient un cosinus proche de -1. Lors d'une transition entre un état et le même état, on obtient un cosinus proche de 1. Dans le cas d'une transition entre un état et un état adjacent, on obtient un cosinus proche de 0.

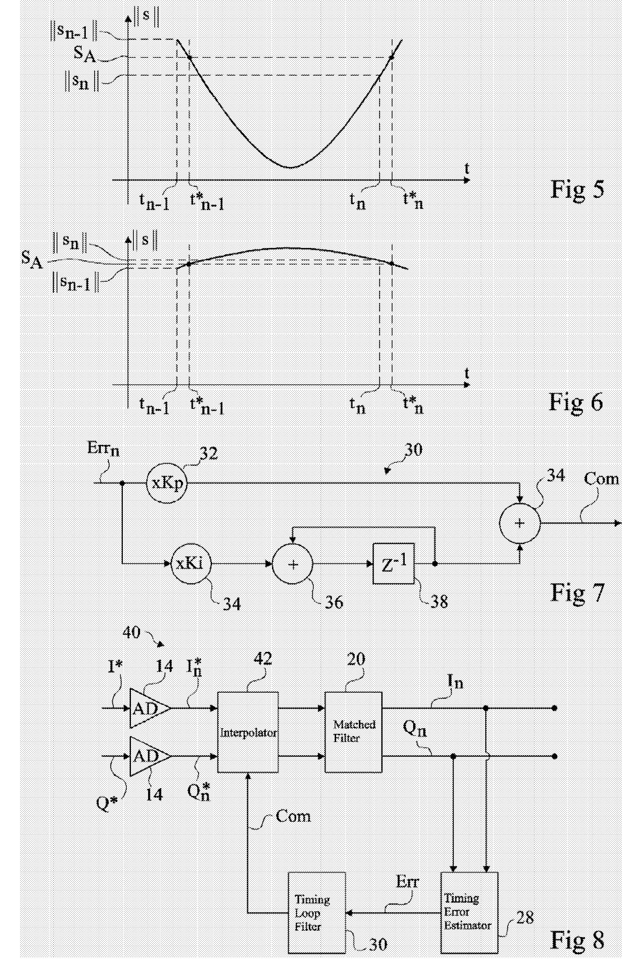

Les figures 5 et 6 illustrent le procédé de détermination du signal d'erreur lorsque le signal s évolue, respectivement, d'un état à l'état opposé et d'un état au même état ou d'un état à un état adjacent. Sur les figures 5 et 6, les instants d'échantillonnage $t_{n-1}$ et $t_n$ utilisés sont en avance par rapport aux instants d'échantillonnage optimaux $t^*_{n-1}$ et $t^*_n$, le décalage entre les instants d'échantillonnage utilisés et les instants d'échantillonnage optimaux étant le même. Il apparaît bien que le terme $\|s_n\|-\|s_{n-1}\|$ lors de la transition d'un état vers un état adjacent ou lors de la transition d'un état vers le même état est nettement inférieur au terme $\|\mathbf{s_n}\|-\|\mathbf{s_{n-1}}\|$ lors d'une transition entre un état et l'état opposé. Plus généralement, pour une modulation de phase à plus de quatre états, les transitions entre un état et un état de la constellation le plus éloigné possible fournissent les valeurs les plus élevées pour le terme $\|s_n\|-\|s_{n-1}\|$.

Les inventeurs ont mis en évidence que la contribution au signal d'erreur $Err_n$ est essentiellement due au terme $\|s_n\|-\|s_{n-1}\|$. Pour une modulation de phase, les transitions entre un état et un état de la constellation le plus éloigné possible fournissant les valeurs les plus élevées pour le terme $\|s_n\|-\|s_{n-1}\|$, ce sont donc de telles transitions qui participent le plus à la régulation réalisée par la boucle de correction de cadence 26. Comme pour de telles transitions, l'évolution de $\|s\|$ est connue avec une forte probabilité, le terme $\|\mathbf{s_n}\|-\|\mathbf{s_{n-1}}\|$ peut donc être utilisé pour déterminer un signal d'erreur représentatif du décalage entre les instants d'échantillonnage utilisés et les instants d'échantillonnage optimaux. Le facteur de pondération introduit une non-linéarité dans l'expression du signal d'erreur $Err_n$ qui assure une convergence de la boucle de correction de cadence 26.

Les inventeurs ont mis en évidence que la boucle de correction de cadence 26 selon l'invention converge également pour une modulation combinant une modulation d'amplitude et une modulation de phase.

Pour une modulation QPSK, en fonction du choix de la constante A, le facteur de pondération peut, en outre, permettre de limiter encore davantage la participation à la régulation obtenue par la boucle de correction de cadence des transitions entre un état et le même état ou entre un état et l'état adjacent. A titre d'exemple, pour une constante A nulle, le facteur de pondération est nul pour une transition entre un état et un état adjacent puisque l'angle entre $s_n$ et $s_{n-1}$ est alors d'environ 90°. Pour $A=<\|s_n\|^2>/2$, où $<\|s_n\|^2>$ correspond à la moyenne du carré de $\|s_n\|$, le facteur de pondération est d'environ 1/2 pour une transition entre un état et le même état et d'environ -1/2 pour une transition entre un état et un état adjacent.

De façon générale, pour une modulation de phase à plus de quatre états, le facteur de pondération peut être choisi pour privilégier, pour la détermination du signal d'erreur $Err_n$, les transitions entre deux états pour lesquels l'angle entre les états est le plus proche de 180° ou de 0° par rapport aux transitions entre deux états pour lesquels l'angle entre les états est le plus proche de 0° ou de 90°.

Selon une variante de la présente invention et en tenant compte de ce qui précède, le facteur de pondération peut être remplacé par le signe du second terme entre crochets de l'équation (7). La boucle de correction de cadence 26 permet alors toujours d'obtenir la convergence des instants d'échantillonnage vers les instants d'échantillonnage optimaux.

Selon une autre variante de la présente invention, pour la détermination du signal d'erreur $Err_n$, le module $\|s_n\|$ peut être remplacé par une expression approchée. A titre d'exemple, le module $\|s_n\|$ peut être obtenu par l'expression approchée suivante :

$$\|\mathbf{s_n}\| = \|I_n + jQ_n\| \approx \sup(|I_n|,|Q_n|) + \frac{1}{2}\inf(|I_n|,|Q_n|) \qquad (8)$$

Selon une autre variante de la présente invention, le premier terme entre crochets de l'équation (7) peut être remplacé par la différence des carrés des modules des échantillons successifs de s. Lorsque le module d'estimation d'erreur 28 est réalisé par des circuits dédiés, la détermination du carré du module d'un signal complexe peut, en général, être obtenue plus simplement que la simple détermination du module.

La figure 7 représente un exemple de réalisation du filtre 30 de la boucle de correction de cadence 26. Il s'agit d'un filtre du premier ordre. Le filtre 30 comprend deux chemins : un chemin proportionnel et un chemin intégral. Dans le chemin proportionnel, le signal d'erreur $Err_n$ est fourni à un module d'amplification 32 dans lequel il est multiplié par une constante de proportionnalité Kp puis est fourni à une première entrée d'un additionneur 34. Dans le chemin d'intégration, le signal $Err_n$ est fourni à un amplificateur 34 dans lequel il est multiplié par une constante d'intégration Ki puis est fourni à une première entrée d'un additionneur 36. La sortie de l'additionneur 36 attaque un module de décalage 38 qui mémorise, à chaque coup d'horloge symbole, la valeur fournie par l'additionneur 36 et fournit la valeur précédemment mémorisée à la seconde entrée de l'additionneur 36. La sortie du module de décalage 38 est fournie à la seconde entrée de l'additionneur 34. L'additionneur 34 fournit le signal de commande Com. Un tel filtre du premier ordre permet de façon classique de suivre à la fois une erreur d'échantillonnage en phase et en fréquence.

La figure 8 illustre un autre exemple de démodulateur 40 pour transmission numérique par modulation de phase dans lequel le module d'estimation d'erreur de cadence 28 selon la présente invention peut être utilisé. Les éléments communs avec le démodulateur 10 représenté en figure 2 sont indiqués avec les mêmes références. Pour le démodulateur 40, les convertisseurs analogiques/numériques 14 échantillonnent à une fréquence d'échantillonnage fixe les signaux I*, Q* fournis par le module de transfert en bande de base et attaquent un interpolateur 42 adapté à déterminer, par un algorithme d'interpolation, au moins un échantillon par symbole à partir des échantillons successifs fournis par chaque convertisseur 14 à un instant déterminé et du signal de commande Com. Le reste du démodulateur 30 est identique au démodulateur 10 représenté en figure 2, la boucle de correction de décalage de porteuse n'étant pas représentée.

La présente invention comporte de nombreux avantages :

premièrement, le signal d'erreur fourni par le module d'estimation d'erreur de cadence selon la présente invention est indépendant du décalage de la porteuse. En effet, le premier terme entre crochets de l'équation (7) étant constitué par la différence de deux modules, il est indépendant de toute rotation de la constellation qui résulte d'une transposition incorrecte du signal modulé en bande de base. Le second terme entre crochets de l'équation (7) étant proportionnel au cosinus de l'angle de deux échantillons successifs, il est également indépendant de toute rotation de la constellation, si celle-ci est suffisamment lente, ce qui est généralement le cas à cette étape de la démodulation.

Deuxièmement, le module d'estimation d'erreur de cadence selon la présente invention ne requiert pas la détermination de valeurs inter-symboles supplémentaires entre deux échantillons. Ceci permet de simplifier la structure du module d'estimation d'erreur de cadence lorsqu'il est réalisé par des circuits dédiés.

Troisièmement, l'algorithme mis en oeuvre pour la détermination du signal d'erreur est relativement simple. Ceci permet de simplifier la structure du module d'estimation d'erreur de cadence lorsqu'il est réalisé par des circuits dédiés.

Bien entendu, la présente invention est susceptible de diverses variantes et modifications qui apparaîtront à l'homme de l'art. En particulier, la boucle de correction de décalage de porteuse a été représentée imbriquée à la boucle de correction de cadence. La boucle de correction de décalage de porteuse peut, toutefois, être prévue avant ou après la boucle de correction de cadence.

**Revendications**

1.  Dispositif (28) de fourniture d'un signal numérique d'erreur ($Err_n$), pour une boucle de correction de cadence d'un démodulateur numérique pour transmission numérique par modulation de phase ou modulation d'amplitude et de phase, le dispositif recevant successivement des paires de signaux numériques ($I_n$, $Q_n$) représentatifs des composantes de signaux complexes, et comprenant :

    un moyen de fourniture d'un signal de différence représentatif de la différence entre le module, élevé à une puissance déterminée, du signal complexe correspondant à la dernière paire de signaux numériques reçue et le module, élevé à la puissance déterminée, du signal complexe correspondant à la paire de signaux numériques précédemment reçue ;
    un moyen de fourniture d'un facteur de pondération qui dépend de l'angle entre le signal complexe correspondant à la dernière paire de signaux numériques reçue et le signal complexe correspondant à la paire de signaux numériques précédemment reçue ; et
    un moyen de fourniture du signal d'erreur proportionnel au produit du signal de différence et du facteur de pondération.

2.  Dispositif selon la revendication 1, dans lequel le moyen de fourniture du facteur de pondération est adapté à fournir le facteur de pondération égal à la somme d'une constante déterminée et d'un terme dont le signe dépend de l'angle entre le signal complexe correspondant à la dernière paire de signaux numériques reçue et le signal complexe correspondant à la paire de signaux numériques précédemment reçue.

3. Dispositif selon la revendication 1, dans lequel le moyen de fourniture du facteur de pondération est adapté à fournir le facteur de pondération égal à la somme de la constante déterminée et d'un terme proportionnel au cosinus de l'angle entre le signal complexe correspondant à la dernière paire de signaux numériques reçue et le signal complexe correspondant à la paire de signaux numériques précédemment reçue.

4. Boucle de correction de cadence (26) pour un démodulateur numérique pour transmission numérique par modulation de phase ou par modulation d'amplitude et de phase, comprenant :

des convertisseurs analogique-numérique (14) recevant une paire de signaux analogiques (I*, Q*) et fournissant successivement au rythme d'un signal d'horloge d'échantillonnage (CLK) des paires de signaux numériques ($I^*_n$, $Q^*_n$) échantillonnés représentatifs des composantes de signaux complexes ;
un dispositif (28) de fourniture d'un signal d'erreur numérique ($Err_n$) selon la revendication 1, 2 ou 3, recevant successivement des paires de signaux numériques ($I_n$, $Q_n$) obtenues par filtrage des paires de signaux numériques échantillonnés ; et
un moyen (30, 32) de fourniture d'un signal d'horloge d'échantillonnage dont la fréquence varie en fonction du signal d'erreur.

5. Boucle de correction de cadence (40) pour un démodulateur numérique pour transmission numérique par modulation de phase ou par modulation d'amplitude et de phase, comprenant :

des convertisseurs analogique-numérique (14) recevant une paire de signaux analogiques (I*, Q*) et fournissant successivement à une fréquence déterminée des paires de signaux numériques ($I^*_n$, $Q^*_n$) échantillonnés représentatifs des composantes de signaux complexes ;
un moyen d'interpolation (42) recevant les paires de signaux numériques échantillonnés et adapté à fournir successivement des paires de signaux numériques interpolés ($I_n$, $Q_n$) à partir de dernières paires de signaux numériques échantillonnés reçus et d'un signal de commande (Com) ;
un dispositif (28) de fourniture d'un signal d'erreur numérique ($Err_n$) selon la revendication 1, 2 ou 3, recevant successivement les paires de signaux numériques interpolés ; et
un moyen de fourniture du signal de commande qui varie en fonction du signal d'erreur.

6. Démodulateur numérique (10) recevant un signal modulé (v) par une modulation de phase ou par une modulation d'amplitude et de phase, comprenant :

un module de transfert (12) en bande de base du signal modulé adapté à fournir une paire de signaux analogiques (I*, Q*) représentatifs des composantes d'un signal complexe ; et
une boucle de correction de cadence (26) selon la revendication 4 ou 5, recevant la paire de signaux analogiques.

7. Procédé de fourniture d'un signal numérique d'erreur ($Err_n$), pour une boucle de correction de cadence d'un démodulateur numérique pour transmission numérique par modulation de phase ou par modulation d'amplitude et de phase, comprenant les étapes suivantes :

recevoir successivement des paires de signaux numériques ($I_n$, $Q_n$) représentatifs des composantes de signaux complexes ;
fournir un signal de différence représentatif de la différence entre le module, élevé à une puissance déterminée, du signal complexe correspondant à la dernière paire de signaux numériques reçue et le module, élevé à la puissance déterminée, du signal complexe correspondant à la paire de signaux numériques précédemment reçue ;
fournir un facteur de pondération qui dépend de l'angle entre le signal complexe correspondant à la dernière paire de signaux numériques reçue et le signal complexe correspondant à la paire de signaux numériques précédemment reçue ; et
fournir le signal d'erreur proportionnel au produit du signal de différence et du facteur de pondération.

8. Procédé selon la revendication 7, dans lequel le facteur de pondération est égal à la somme de la constante déterminée et d'un terme proportionnel au cosinus de l'angle entre le signal complexe correspondant à la dernière paire de signaux numériques reçue et le signal complexe correspondant à la paire de signaux numériques précédemment reçue.

9. Procédé selon la revendication 7, dans lequel le facteur de pondération est égal au signe de la somme de la constante déterminée et d'un terme égal au cosinus de l'angle entre le signal complexe correspondant à la dernière paire de signaux numériques reçue et le signal complexe correspondant à la paire de signaux numériques précédemment reçue.

10. Procédé selon la revendication 7, dans lequel la constante déterminée est nulle.

Fig 1

Fig 2

Fig 3

Fig 4

Fig 5

Fig 6

Fig 7

Fig 8

**Office européen des brevets**

**RAPPORT DE RECHERCHE EUROPEENNE**

Numéro de la demande

EP 05 11 0491

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 4 416 015 A (GITLIN ET AL) 15 novembre 1983 (1983-11-15) * colonne 8, ligne 45 - dernière ligne * * colonne 9, ligne 38 - colonne 10, ligne 9 * * figure 5 * ----- | 1,4,7 | H04L7/02 |
| A | US 2001/017902 A1 (YAMAGATA TAKU ET AL) 30 août 2001 (2001-08-30) * page 2, colonne 2, alinéa 40 * * figures 2,8 * ----- | 1,4,5,7 | |
| A | EP 1 134 928 A (MITSUBISHI DENKI KABUSHIKI KAISHA) 19 septembre 2001 (2001-09-19) * page 8, ligne 25 - ligne 50 * * page 10, ligne 33 - ligne 41 * * figure 10 * ----- | 1,4,7 | |
| A | US 2001/048723 A1 (OH JI-SUNG) 6 décembre 2001 (2001-12-06) * page 2, colonne 2, alinéa 23 * * figures 1,2 * ----- | 4-6 | DOMAINES TECHNIQUES RECHERCHES (IPC) |
| A | US 6 621 857 B1 (BELOTSERKOVSKY MAXIM B ET AL) 16 septembre 2003 (2003-09-16) * colonne 6, ligne 23 - ligne 55 * * figures 4,6 * ----- | 4-6 | H04L |

Le présent rapport a été établi pour toutes les revendications

| Lieu de la recherche | Date d'achèvement de la recherche | Examinateur |
|---|---|---|
| La Haye | 18 janvier 2006 | Moreno, M |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 11 0491

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-01-2006

| Document brevet cité au rapport de recherche | | Date de publication | Membre(s) de la famille de brevet(s) | | Date de publication |
|---|---|---|---|---|---|
| US 4416015 | A | 15-11-1983 | AUCUN | | |
| US 2001017902 | A1 | 30-08-2001 | JP | 2001217889 A | 10-08-2001 |
| EP 1134928 | A | 19-09-2001 | CA | 2338922 A1 | 17-09-2001 |
| | | | CN | 1327330 A | 19-12-2001 |
| | | | DE | 60106998 D1 | 16-12-2004 |
| | | | DE | 60106998 T2 | 24-11-2005 |
| | | | JP | 2001268146 A | 28-09-2001 |
| | | | US | 2001031021 A1 | 18-10-2001 |
| US 2001048723 | A1 | 06-12-2001 | CA | 2338411 A1 | 04-11-2001 |
| | | | CN | 1323124 A | 21-11-2001 |
| | | | JP | 3647377 B2 | 11-05-2005 |
| | | | JP | 2001320434 A | 16-11-2001 |
| US 6621857 | B1 | 16-09-2003 | AU | 2455801 A | 16-07-2001 |
| | | | CN | 1415157 A | 30-04-2003 |
| | | | EP | 1266499 A2 | 18-12-2002 |
| | | | JP | 2003519955 T | 24-06-2003 |
| | | | WO | 0150631 A2 | 12-07-2001 |

EPO FORM P0460

Pour tout renseignement concernant cette annexe : voir Journal Officiel de l'Office européen des brevets, No.12/82